(19) Europäisches Patentamt
European Patent Office
Office européen des brevets

(11) EP 4 514 008 A1

(12) EUROPEAN PATENT APPLICATION
published in accordance with Art. 153(4) EPC

(43) Date of publication:
26.02.2025 Bulletin 2025/09

(21) Application number: 23802651.2

(22) Date of filing: 25.04.2023

(51) International Patent Classification (IPC):
H04W 72/04 (2023.01)

(52) Cooperative Patent Classification (CPC):
H04W 72/04; H04W 72/044; H04W 72/0453;
H04W 72/232

(86) International application number:
PCT/CN2023/090677

(87) International publication number:
WO 2023/216877 (16.11.2023 Gazette 2023/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.05.2022 CN 202210510827

(71) Applicant: Huawei Technologies Co., Ltd.
Shenzhen, Guangdong 518129 (CN)

(72) Inventors:
• GAO, Kuandong
  Shenzhen, Guangdong 518129 (CN)
• HUANG, Huang
  Shenzhen, Guangdong 518129 (CN)

(74) Representative: Maiwald GmbH
Engineering
Elisenhof
Elisenstrasse 3
80335 München (DE)

(54) **COMMUNICATION METHOD AND APPARATUS, AND STORAGE MEDIUM**

(57) This application discloses a communication method and apparatus, and a storage medium. The method includes: A terminal obtains first signaling, where the first signaling includes a transmit power of a first time-frequency resource and a first frequency domain parameter of the first time-frequency resource. The terminal obtains downlink control information, where the downlink control information includes a second frequency domain parameter of the first time-frequency resource and a third frequency domain parameter and a modulation and coding scheme of a second time-frequency resource, the second frequency domain parameter is for frequency domain resource allocation of the first time-frequency resource, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource. According to the solutions in this application, the transmit power of the first time-frequency resource is configured by using the first signaling, so that the terminal can accurately determine the transmit power of the first time-frequency resource, to avoid impact on an adjacent frequency band.

FIG. 8

## Description

This application claims priority to Chinese Patent Application No. 202210510827.1, filed with the China National Intellectual Property Administration on May 11, 2022 and entitled "COMMUNICATION METHOD AND APPARATUS, AND STORAGE MEDIUM", which is incorporated herein by reference in its entirety.

## TECHNICAL FIELD

This application relates to the field of communication technologies, and in particular, to a communication method and apparatus, and a storage medium.

## BACKGROUND

A tone reservation (tone reservation, TR)-discrete Fourier transform (discrete Fourier transform, DFT)-s-orthogonal frequency division multiplexing (orthogonal frequency division multiplexing, OFDM) technology may be used to generate a signal for reducing a peak to average power ratio (peak to average power ratio, PAPR).

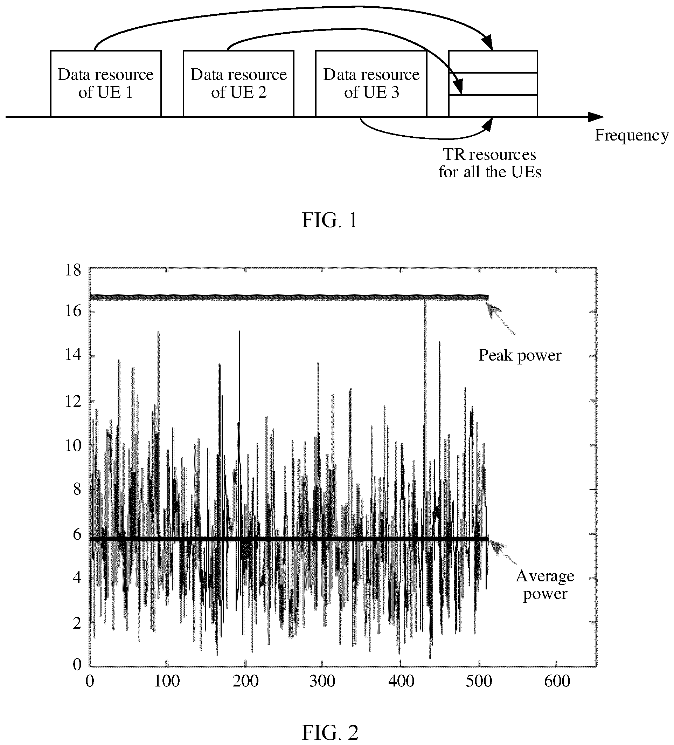

However, FIG. 1 is a diagram of mapping a TR signal to a scheduled bandwidth of a terminal. A plurality of terminals (for example, user equipment (user equipment, UE) 1, UE 3, and UE 3 in FIG. 1) share a segment of TR resources. As a result, a power of a frequency near the segment of TR resources increases, and non-linear distortion of a device affects signal receiving of an adj acent band. In FIG. 1, data of the UE 3 is affected by non-linear distortion of a TR resource. Therefore, a proper transmit power needs to be set for the TR resource.

However, there is currently no corresponding solution of how to configure a transmit power of a time-frequency resource when a signal is sent by using the TR-DFT-s-OFDM technology.

## SUMMARY

This application provides a communication method and apparatus, and a storage medium, to effectively control a transmit power of a first time-frequency resource, and avoid impact on an adjacent frequency band.

According to a first aspect, a communication method is provided. The method includes: A terminal obtains first signaling, where the first signaling includes a transmit power of a first time-frequency resource and a first frequency domain parameter of the first time-frequency resource, and the first frequency domain parameter is for frequency domain resource allocation of the first time-frequency resource. The terminal obtains downlink control information, where the downlink control information includes a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

In this aspect, the transmit power of the first time-frequency resource is configured by using the first signaling, so that the terminal can accurately determine the transmit power of the first time-frequency resource, to avoid impact on an adjacent frequency band.

In a possible implementation, the first time-frequency resource is for carrying a tone reservation TR signal of the terminal, the second time-frequency resource is for carrying a first signal of the terminal, and the first signal includes at least one of the following: a modulation signal or a reference signal.

In this implementation, the TR signal is carried on the first time-frequency resource, so that a PAPR of the first signal can be reduced.

In another possible implementation, the modulation signal includes at least one of the following signals: a data signal, uplink control information, and a message 3. The reference signal includes at least one of the following signals: a sounding reference signal, a demodulation reference signal, and a random access preamble.

In still another possible implementation, the transmit power of the first time-frequency resource is associated with at least one of the following: a transmit power of the second time-frequency resource and a first difference.

In this implementation, the transmit power of the first time-frequency resource is associated with at least one of the transmit power of the second time-frequency resource and the first difference. The transmit power of the second time-frequency resource and/or the first difference are/is obtained, and in this case, the transmit power of the first time-frequency resource can be accurately determined.

In still another possible implementation, $P_{TR} = P - \Delta P$, where $P_{TR}$ is the transmit power of the first time-frequency resource, P is the transmit power of the second time-frequency resource, and $\Delta P$ is the first difference.

In still another possible implementation, the first signaling includes the first difference. Alternatively, the downlink control information includes the first difference. Alternatively, the first signaling includes a plurality of first differences, and the downlink control information indicates one of the plurality of first differences.

In this implementation, the first difference may be configured or indicated by using the first signaling or the downlink control information, so that the terminal can accurately determine the transmit power of the first time-frequency resource based on the first difference and the transmit power of the second time-frequency resource.

In still another possible implementation, the first difference is associated with at least one of the following: a bandwidth of the first time-frequency resource, a bandwidth of the second time-frequency resource, a modulation scheme of an adjacent scheduled frequency band of the second time-frequency resource, a modulation and coding scheme of the adjacent scheduled frequency band of the second time-frequency resource, and a modulation scheme of the second time-frequency resource.

In this implementation, the terminal obtains at least one of the bandwidth of the first time-frequency resource, the bandwidth of the second time-frequency resource, the modulation scheme of the adjacent scheduled frequency band of the second time-frequency resource, the modulation and coding scheme of the adjacent scheduled frequency band of the second time-frequency resource, and the modulation scheme of the second time-frequency resource. In this case, the transmit power of the first time-frequency resource can be accurately determined based on the association relationship.

In still another possible implementation, a guardband exists at a frequency domain position adjacent to the first time-frequency resource.

In this implementation, the guardband is set, so that interference to a signal on an adjacent frequency band of the first time-frequency resource can be reduced.

In still another possible implementation, a size of the guardband is associated with the scheduled bandwidth of the first time-frequency resource.

In this implementation, the size of the guardband can be accurately determined based on the scheduled bandwidth of the first time-frequency resource, to reduce the interference to the signal on the adjacent frequency band of the first time-frequency resource.

In still another possible implementation, the first signaling further includes an out-of-band transmit power of the first time-frequency resource, or an out-of-band transmit power of the first time-frequency resource is agreed on in a protocol.

In this implementation, the out-of-band transmit power of the first time-frequency resource is configured by using the signaling or agreed on in the protocol, so that the interference to the signal on the adjacent frequency band of the first time-frequency resource can be reduced.

In still another possible implementation, the out-of-band transmit power of the first time-frequency resource is associated with the transmit power of the second time-frequency resource.

In still another possible implementation, different first time-frequency resources correspond to a same out-of-band transmit power.

According to a second aspect, a communication method is provided. The method includes: A network device sends first signaling, where the first signaling includes a transmit power of a first time-frequency resource and a first frequency domain parameter of the first time-frequency resource, and the first frequency domain parameter is for frequency domain resource allocation of the first time-frequency resource. The network device sends downlink control information, where the downlink control information includes a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

In this aspect, the network device configures the transmit power of the first time-frequency resource by using the first signaling, so that a terminal can accurately determine the transmit power of the first time-frequency resource, to avoid impact on an adjacent frequency band.

In a possible implementation, the first time-frequency resource is for carrying a tone reservation TR signal of the terminal, the second time-frequency resource is for carrying a first signal of the terminal, and the first signal includes at least one of the following: a modulation signal or a reference signal.

In another possible implementation, the transmit power of the first time-frequency resource is associated with at least one of the following: a transmit power of the second time-frequency resource and a first difference.

In still another possible implementation, the first signaling includes the first difference. Alternatively, the downlink control information includes the first difference. Alternatively, the first signaling includes a plurality of first differences, and the downlink control information includes one of the plurality of first differences.

In still another possible implementation, the first difference is associated with at least one of the following: a bandwidth of the first time-frequency resource, a bandwidth of the second time-frequency resource, a modulation scheme of an adjacent scheduled frequency band of the second time-frequency resource, a modulation and coding scheme of the adjacent scheduled frequency band of the second time-frequency resource, and a modulation scheme of the second time-frequency resource.

In still another possible implementation, a guardband exists at a frequency domain position adjacent to the first time-frequency resource.

In still another possible implementation, a size of the guardband is associated with the scheduled bandwidth of the first time-frequency resource.

According to a third aspect, a communication apparatus is provided. The communication apparatus may implement the method in the first aspect. For example, the communication apparatus may be a terminal. The foregoing method may be implemented by software, hardware, or hardware executing corresponding software.

In a possible implementation, the apparatus includes a processing unit, and may further include a transceiver unit. The processing unit is configured to obtain first signaling, where the first signaling includes a transmit power of a first time-frequency resource and a first frequency domain parameter of the first time-frequency resource, and the first frequency domain parameter is for frequency domain resource allocation of the first time-frequency resource. The processing unit is further configured to obtain downlink control information, where the downlink control information includes a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

According to a fourth aspect, a communication apparatus is provided. The communication apparatus may implement the method in the second aspect. For example, the communication apparatus may be a network device. The foregoing method may be implemented by software, hardware, or hardware executing corresponding software.

In a possible implementation, the apparatus includes a transceiver unit, and may further include a processing unit. The transceiver unit is configured to send first signaling, where the first signaling includes a transmit power of a first time-frequency resource and a first frequency domain parameter of the first time-frequency resource, and the first frequency domain parameter is for frequency domain resource allocation of the first time-frequency resource. The transceiver unit is further configured to send downlink control information, where the downlink control information includes a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

In another possible implementation, the communication apparatus includes a processor coupled to a memory, and the processor is configured to support the apparatus in performing a corresponding function in the foregoing communication method. The memory is configured to be coupled to the processor, and stores a computer program (or computer-executable instructions) and/or data necessary for the apparatus. Optionally, the communication apparatus may further include a communication interface, configured to support communication between the apparatus and another network element, for example, sending or receiving of data and/or a signal. For example, the communication interface may be a transceiver, a circuit, a bus, a module, or a communication interface of another type. Optionally, the memory may be located inside the communication apparatus and integrated with the processor, or may be located outside the communication apparatus.

In still another possible implementation, the communication apparatus includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, an interface circuit, or an input/output interface, and is configured to receive a signal from a communication apparatus other than the communication apparatus and transmit the signal to the processor, or send a signal from the processor to a communication apparatus other than the communication apparatus. When the communication apparatus is a chip, the transceiver apparatus is the transceiver circuit or the input/output interface.

When the communication apparatus is the chip, a sending unit may be an output unit, for example, an output circuit or a communication interface, and a receiving unit may be an input unit, for example, an input circuit or a communication interface. When the communication apparatus is the terminal, a sending unit may be a transmitter or a transmitter machine, and a receiving unit may be a receiver or a receiver machine.

With reference to the third aspect or the fourth aspect, in still another possible implementation, the first time-frequency resource is for carrying a tone reservation TR signal of the terminal, the second time-frequency resource is for carrying a first signal of the terminal, and the first signal includes at least one of the following: a modulation signal or a reference signal.

In this implementation, the TR signal is carried on the first time-frequency resource, so that a PAPR of the first signal can be reduced.

With reference to the third aspect or the fourth aspect, in still another possible implementation, the modulation signal includes at least one of the following signals: a data signal, uplink control information, and a message 3. The reference signal includes at least one of the following signals: a sounding reference signal, a demodulation reference signal, and a random access preamble.

With reference to the third aspect or the fourth aspect, in still another possible implementation, the transmit power of the first time-frequency resource is associated with at least one of the following: a transmit power of the second time-frequency resource and a first difference.

In this implementation, the transmit power of the first time-frequency resource is associated with the at least one of the transmit power of the second time-frequency resource and the first difference. The transmit power of the second time-frequency resource and/or the first difference are/is obtained, and in this case, the transmit power of the first time-frequency resource can be accurately determined.

With reference to the third aspect or the fourth aspect, in still another possible implementation, $P_{TR} = P - \Delta P$, where $P_{TR}$ is the transmit power of the first time-frequency resource, P is the transmit power of the second time-frequency resource, and $\Delta P$ is the first difference.

With reference to the third aspect or the fourth aspect, in still another possible implementation, the first signaling includes the first difference. Alternatively, the downlink control information includes the first difference. Alternatively, the first signaling includes a plurality of first differences, and the downlink control information indicates one of the plurality of first differences.

In this implementation, the first difference may be configured or indicated by using the first signaling or the downlink control information, so that the terminal can accurately determine the transmit power of the first time-frequency resource based on the first difference and the transmit power of the second time-frequency resource.

With reference to the third aspect or the fourth aspect, in still another possible implementation, the first difference is associated with at least one of the following: a bandwidth of the first time-frequency resource, a bandwidth of the second time-frequency resource, a modulation scheme of an adjacent scheduled frequency band of the second time-frequency resource, a modulation and coding scheme of the adjacent scheduled frequency band of the second time-frequency resource, and a modulation scheme of the second time-frequency resource.

In this implementation, the terminal obtains the at least one of the bandwidth of the first time-frequency resource, the bandwidth of the second time-frequency resource, the modulation scheme of the adjacent scheduled frequency band of the second time-frequency resource, the modulation and coding scheme of the adjacent scheduled frequency band of the second time-frequency resource, and the modulation scheme of the second time-frequency resource. In this case, the transmit power of the first time-frequency resource can be accurately determined based on the association relationship.

With reference to the third aspect or the fourth aspect, in still another possible implementation, a guardband exists at a frequency domain position adjacent to the first time-frequency resource.

In this implementation, the guardband is set, so that interference to a signal on an adjacent frequency band of the first time-frequency resource can be reduced.

With reference to the third aspect or the fourth aspect, in still another possible implementation, a size of the guardband is associated with the scheduled bandwidth of the first time-frequency resource.

In this implementation, the size of the guardband can be accurately determined based on the scheduled bandwidth of the first time-frequency resource, to reduce the interference to the signal on the adjacent frequency band of the first time-frequency resource.

With reference to the third aspect or the fourth aspect, in still another possible implementation, the first signaling further includes an out-of-band transmit power of the first time-frequency resource, or an out-of-band transmit power of the first time-frequency resource is agreed on in a protocol.

In this implementation, the out-of-band transmit power of the first time-frequency resource is configured by using the signaling or agreed on in the protocol, so that the interference to the signal on the adjacent frequency band of the first time-frequency resource can be reduced.

With reference to the third aspect or the fourth aspect, in still another possible implementation, the out-of-band transmit power of the first time-frequency resource is associated with the transmit power of the second time-frequency resource.

With reference to the third aspect or the fourth aspect, in still another possible implementation, different first time-frequency resources correspond to a same out-of-band transmit power.

According to a fifth aspect, a communication system is provided. The communication system includes the communication apparatus according to the third aspect and the communication apparatus according to the fourth aspect.

According to a sixth aspect, a computer-readable storage medium is provided. The computer-readable storage medium stores a computer program or instructions, and when the program or the instructions are executed by a processor, the method according to the first aspect or the second aspect or any one of the implementations of the first aspect or the second aspect is performed.

According to a seventh aspect, a computer program product is provided. When the computer program product is executed on a computing device, the method according to the first aspect or the second aspect or any one of the implementations of the first aspect or the second aspect is performed.

According to an eighth aspect, a circuit is provided. The circuit is coupled to a memory, and the circuit is configured to perform the method according to the first aspect or the second aspect or any one of the implementations of the first aspect or the second aspect. The circuit may include a chip circuit.

## BRIEF DESCRIPTION OF DRAWINGS

FIG. 1 is a diagram in which a plurality of terminal devices share a segment of TR resources;

FIG. 2 is a diagram of a peak-to-average ratio according to an embodiment of this application;

FIG. 3 is a diagram of a multi-carrier signal according to an embodiment of this application;

FIG. 4 is a block diagram of an implementation of a DFT-s-OFDM system according to an embodiment of this application;

FIG. 5 is a block diagram of an implementation of a TR-DFT-s-OFDM system according to an embodiment of this application;

FIG. 6a is a diagram of mapping a TR signal to a scheduled bandwidth of a terminal according to an embodiment of this application;

FIG. 6b is another diagram of mapping a TR signal to a scheduled bandwidth of a terminal according to an embodiment of this application;

FIG. 6c is still another diagram of mapping a TR signal to a scheduled bandwidth of a terminal according to an embodiment of this application;

FIG. 7 is a diagram of a structure of a communication system according to an embodiment of this application;

FIG. 8 is a schematic flowchart of a communication method according to an embodiment of this application;

FIG. 9 is a diagram of an example of a power spectrum of a first time-frequency resource according to an embodiment of this application;

FIG. 10 is a diagram of setting a guardband according to an embodiment of this application;

FIG. 11 is a diagram of setting a guardband of a resource pool according to an embodiment of this application;

FIG. 12 is a diagram of a structure of a communication apparatus according to an embodiment of this application; and

FIG. 13 is a diagram of a structure of another communication apparatus according to an embodiment of this application.

## DESCRIPTION OF EMBODIMENTS

The following describes embodiments of this application with reference to the accompanying drawings in embodiments of this application.

First, several concepts that may be used in this application are described.

PAPR

FIG. 2 is a diagram of a peak-to-average ratio according to an embodiment of this application. From a perspective of a time domain, a radio signal is a sine wave whose amplitude keeps changing, and the amplitude is not constant. A signal amplitude peak in one periodicity is different from an amplitude peak in another periodicity. Therefore, an average power and a peak power in each periodicity are different. A peak power (peak power) is a maximum transient power that occurs at a specific probability over a long period of time, and the probability is usually 0.01% (namely, $10^{-4}$). At this probability, a ratio of the peak power to a total average power (average power) of a system is a peak-to-average ratio.

The peak-to-average ratio of the system is affected by the following two factors.

1. Peak-to-average ratio of a baseband signal. For example, a peak-to-average ratio of a baseband signal obtained through 1024QAM is high, and a power of a baseband signal modulated by using quadrature phase shift keying (quadrature phase shift keying, QPSK) or binary phase shift keying (binary phase shift keying, BPSK) is 1. For the QPSK and the BPSK, it may be understood as that a signal amplitude is constant, and only a phase is changed.

2. Peak-to-average ratio introduced by multi-carrier power superposition

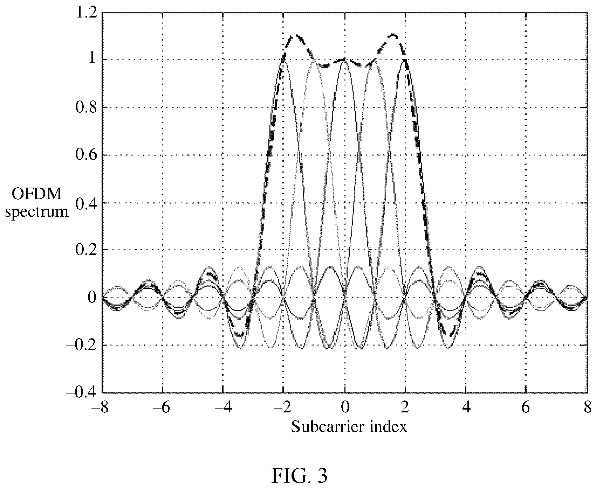

FIG. 3 is a diagram of a multi-carrier signal according to an embodiment of this application. A signal on a carrier is represented as a sine function, and there is a tail on a left side and a right side. At a specific probability, tails of a plurality of carriers may be superposed at a distance to form a point with a large peak power.

Harm of an excessively high PAPR

A signal of a wireless communication system needs to be amplified in power before being sent far away. Due to technical and cost limitations, a power amplifier usually performs linear amplification in only one range. If the range is exceeded, signal distortion is caused (this is similar to a microphone for singing, where the microphone can normally play a voice of a person when the person speaks normally, but the voice becomes strange and unpleasant when the person yells). The signal distortion causes a receive end to fail to correctly parse the signal. To ensure that the signal peak is still within the linear range of the power amplifier, an average power needs to be reduced. This leads to low efficiency of the power amplifier, or is equivalent to a smaller coverage area.

High frequencies (mainly including millimeter wave frequency bands such as 28G, 39G, 60G, and 73G) have become a research and development hotspot in the industry due to rich frequency band resources, to meet increasing communication requirements. In addition to a large bandwidth and a highly integrated antenna array for achieving a high throughput, significant features of the high frequency further include a serious intermediate radio frequency distortion problem, such as a serious path loss, phase noise (phase noise, PHN), and a center frequency offset (carrier frequency offset, CFO). In addition, a Doppler frequency shift of the high frequency is greater. A phase error is introduced by each of the three. As a result, performance of a high-frequency communication system deteriorates or even the high-frequency communication system cannot work.

The phase error may be reduced by using the following technologies.

(1) Cyclic prefix-orthogonal frequency division multiplexing (cyclic prefix, CP-OFDM)

In the CP-OFDM, a modulation symbol obtained through modulation is mapped to a frequency domain subcarrier; then inverse Fourier transform is performed on the modulation symbol, to convert a frequency domain signal into a time domain signal; and then a cyclic prefix is added to obtain a to-be-sent signal.

(2) Discrete Fourier transform spreading orthogonal frequency division multiplexing (discrete Fourier transform spreading OFDM, DFT-s-OFDM)

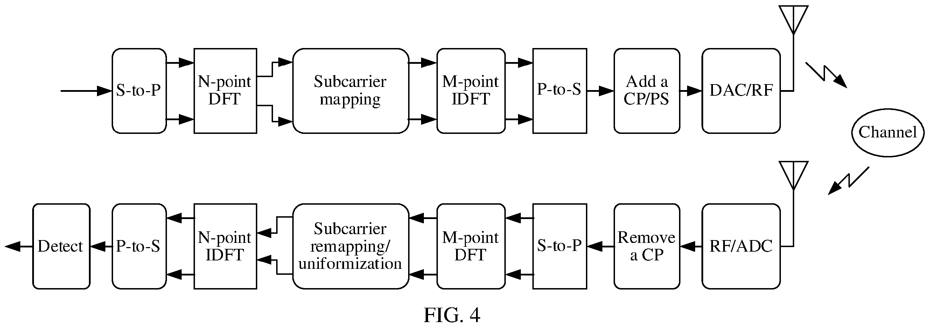

The DFT-s-OFDM is an LTE uplink signal generation manner, and is a variant of a CP-OFDM signal. FIG. 4 is a block diagram of implementation of a DFT-s-OFDM system according to an embodiment of this application. After Fourier transform is performed on a specific quantity of modulation symbols to transform the modulation symbols to frequency domain, frequency domain signals are filtered or directly mapped to frequency domain subcarriers without being filtered, then inverse Fourier transform is performed to convert the frequency domain signal into a time domain signal, and a cyclic prefix is added to obtain a to-be-sent signal.

Because the DFT-s-OFDM includes additional discrete Fourier transform (discrete Fourier transform, DFT) processing (for example, N-point DFT (N-point DFT) in FIG. 4) before a conventional OFDM processing process, the DFT-s-OFDM is also referred to as a linear precoding OFDM technology.

The DFT-s-OFDM is essentially of a single carrier. In physical essence, a DFT-mapping-IFFT operation is actually equivalent to convolution performed on an input signal before DFT and a sine waveform. Because the DFT-s-OFDM is essentially of the single carrier, compared with OFDM, a PAPR of the DFT-s-OFDM is lower, so that transmit efficiency of a terminal device can be improved, and battery use time can be prolonged, thereby reducing terminal costs.

(3) Discrete Fourier transform spreading orthogonal frequency division multiplexing with frequency domain spectrum shaping (discrete Fourier transform spreading OFDM with FDSS, DFT-s-OFDM with FDSS)

In the DFT-s-OFDM with FDSS, additional spectrum replication is performed after DFT, and then a filter is used to multiply a signal obtained through the replication, to achieve frequency domain beamforming. Because the spectrum beamforming is performed, which is equivalent to that a waveform in time domain changes from a sine waveform of DFT-s-OFDM to another waveform with a more limited time length or a lower sideband envelope, a PAPR of a DFT-s-OFDM waveform can be reduced. The DFT-s-OFDM with FDSS is an alternative waveform technology for future mobile communication (6G+) and a high-frequency scenario.

Compared with OFDM, DFT-s-OFDM and the DFT-s-OFDM with FDSS have lower PAPRs. However, when a modulation order of DFT-s-OFDM data is high, there is still a high PAPR, and the PAPR affects a maximum transmit power for sending a signal. To resolve this disadvantage, researchers propose many related technologies, and an effective one of the technologies is to reduce the PAPR by using a reserved tone.

Tone reservation-discrete Fourier transform spreading orthogonal frequency division multiplexing (tone reservation-discrete Fourier transform spreading OFDM, TR-DFT-s-OFDM)

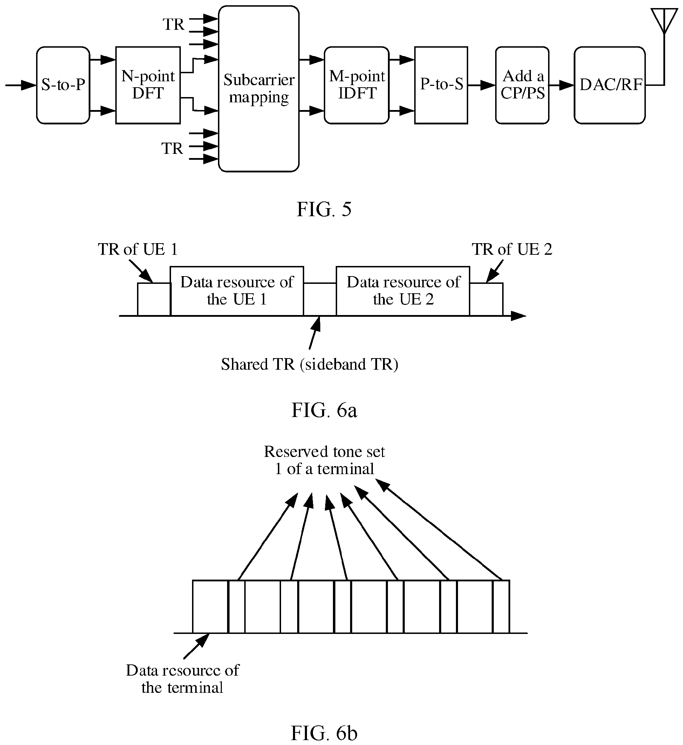

FIG. 5 is a block diagram of implementation of a TR-DFT-s-OFDM system according to an embodiment of this application. It can be learned that a difference between this technology and DFT-s-OFDM lies in that, during subcarrier mapping, in addition to data generated through N-point DFT, another signal is also mapped to a scheduled bandwidth of a terminal. The signal is not for transmitting data, and a receive end only needs to demodulate the data mapped through the N-point DFT. A resource occupied by the another signal is referred to as a reserved tone in this application, or may be referred to as a peak reduction tone (peak reduction tone, PRT). The receive end does not need to learn of what is sent on a TR signal, and only needs to demodulate a signal of a bandwidth part (bandwidth part, BWP) occupied by the data. Therefore, from a perspective of the receive end, the resource occupied by the another signal may be considered as a reserved tone. However, from a perspective of a transmit end, a reserved tone is for reducing a PAPR. Therefore, a signal for reducing the PAPR may be generated based on a sent data signal, and a value of the signal is mapped to the TR, to obtain a reserved signal for reducing the PAPR.

The TR signal may be mapped to the scheduled bandwidth of the terminal in the following several implementations.

In an implementation, FIG. 6a is a diagram of mapping a TR signal to a scheduled bandwidth of a terminal according to an embodiment of this application. There is a reserved tone on two sides of each terminal to reduce a PAPR. When sidebands of two terminals overlap with each other, the sideband may be shared to reduce the PAPR.

In another implementation, FIG. 6b is another diagram of mapping a TR signal to a scheduled bandwidth of a terminal according to an embodiment of this application. A reserved tone may be inserted into a frequency domain resource configured by a network device. Reserved tones placed in different frequency domain resource positions are collectively referred to as a reserved tone set (TR set). The network device or the terminal device sends an index of the reserved tone set to a receive end. The receive end obtains information about a frequency domain resource position of data based on the index, and demodulates the data. Therefore, in this solution, resource position information of a reserved tone of each transmit end needs to be learnt of.

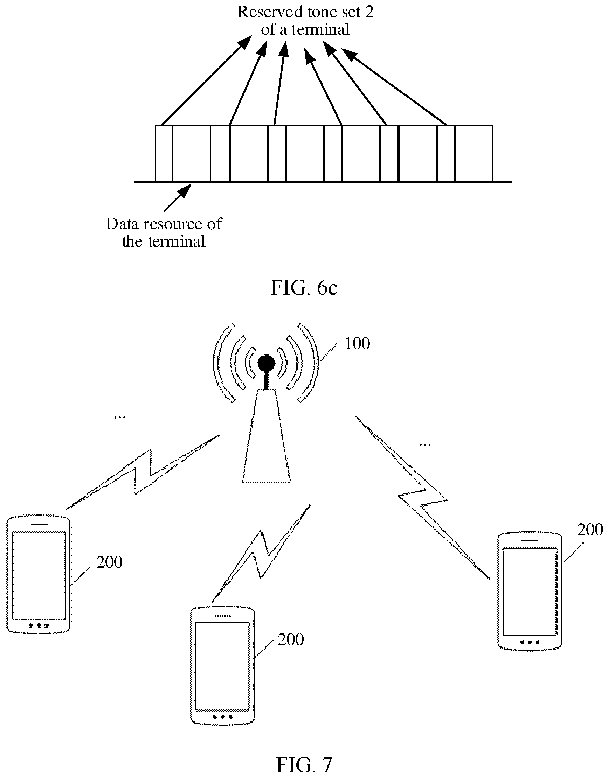

FIG. 6c is still another diagram of mapping a TR signal to a scheduled bandwidth of a terminal according to an embodiment of this application. It is different from FIG. 6b that a position into which a reserved tone is inserted is different from that in FIG. 6b.

However, in the manners of mapping the TR signal to the scheduled bandwidth of the terminal shown in FIG. 6a to FIG. 6c, a TR resource position needs to be independently configured for each terminal, thereby wasting frequency domain resources and causing low spectral efficiency. Therefore, in a manner of mapping a TR signal to a scheduled bandwidth of a terminal shown in FIG. 1, utilization of spectrum resources can be improved, and a TR resource is jointly configured or indicated, so that signaling overheads can be reduced.

However, the manner of mapping the TR signal to the scheduled bandwidth of the terminal shown in FIG. 1 also causes the following problem: A plurality of terminals share a segment of TR resources. As a result, a power of a frequency near the segment of TR resources increases, and non-linear distortion of a device affects signal receiving of an adjacent band.

For that there is currently no corresponding solution proposed in the background of how to configure a transmit power of a time-frequency resource when a signal is sent by using a TR-DFT-s-OFDM technology, this application provides a communication solution, in which a transmit power of a first time-frequency resource is configured by using first signaling, so that a terminal can accurately determine the transmit power of the first time-frequency resource, to avoid impact on an adjacent frequency band.

FIG. 7 is a diagram of a communication system according to an embodiment of this application. The communication system may include at least one network device 100 (only one is shown) and one or more terminals 200 connected to the network device 100.

The network device 100 may be a device that can communicate with the terminal 200. The network device 100 may be any device having a wireless transceiver function, and includes but is not limited to a NodeB NodeB, an evolved NodeB eNodeB, a base station in a 5th generation (5th generation, 5G) communication system, a base station or a network device in a future communication system, an access node in a Wi-Fi system, a wireless relay node, a wireless backhaul node, and the like. The network device 100 may alternatively be a radio controller in a cloud radio access network (cloud radio access network, CRAN) scenario. The network device 100 may alternatively be a small cell, a transmission node (transmission reference point, TRP), or the like. A specific technology and a specific device form that are used by the network device are not limited in embodiments of this application.

The terminal 200 is a device having a wireless transceiver function, and may be deployed on land, including an indoor or outdoor device, or a hand-held, wearable, or vehicle-mounted device; may be deployed on water, for example, on a ship; or may be deployed in air, for example, on an aircraft, a balloon, and a satellite. The terminal may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal sometimes may also be referred to as user equipment (user equipment, UE), an access terminal, a UE unit, a mobile station, a remote station, a remote terminal, a mobile device, a terminal (terminal), a wireless communication device, a UE agent, a UE apparatus, or the like.

It should be noted that the terms "system" and "network" in embodiments of this application may be used interchangeably.

All resource pools or first time-frequency resources in this application may be replaced with any one of the following parameters: a resource pool group, a first time-frequency resource group, a first time-frequency resource, and a resource pool.

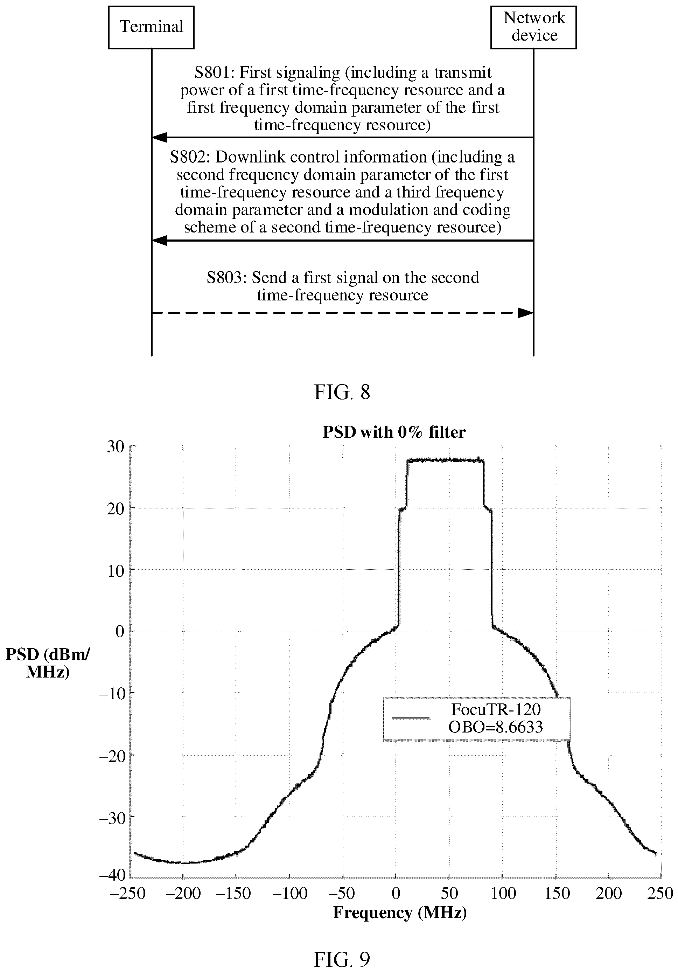

Based on the communication system shown in FIG. 7, FIG. 8 is a schematic flowchart of a communication method according to an embodiment of this application. The method may include the following steps.

S801: The network device sends first signaling.

Correspondingly, the terminal obtains/receives the first signaling.

As shown in FIG. 1, a plurality of terminals schedule a same first time-frequency resource to reduce PAPRs of sent first signals. However, when the plurality of terminals send TR signals on a same frequency domain resource, a power of a frequency near the segment increases, and non-linear distortion of a device affects signal receiving of an adjacent band. A solution may be reducing a transmit power of the first time-frequency resource. In this case, the network device may configure the transmit power of the first time-frequency resource by using the first signaling. In other words, the first signaling includes the transmit power of the first time-frequency resource. The transmit power of the first time-frequency resource indicates the terminal to send a signal on the first time-frequency resource by using the transmit power. In addition, the transmit power may alternatively be agreed on in a protocol or reported by the terminal. The transmit power agreed on in the protocol is a value of a transmit power agreed on between the network device and the terminal.

The first signaling further includes a first frequency domain parameter of the first time-frequency resource. The first frequency domain parameter is for frequency domain resource allocation of the first time-frequency resource. For example, the first frequency domain parameter includes an available frequency domain resource of the first time-frequency resource. For example, the available frequency domain resource includes one or more consecutive frequency domain resource blocks.

After receiving the first signaling, the terminal parses the first signaling, to obtain the transmit power of the first time-frequency resource and the first frequency domain parameter of the first time-frequency resource that are carried in the first signaling.

For example, the first signaling may be any one of system information (system information, SI), radio resource control signaling (radio resource control, RRC) signaling, downlink control information (downlink control information, DCI), or a media access control control element (media access control control element, MAC-CE). The system information may be any piece of system information in a system information block (system information block, SIB) 1, a system information block 2, a system information block 3, a system information block 4, a system information block 5, a system information block 6, a system information block 7, a system information block 8, a system information block 9, a system information block 10, a system information block 11, a system information block 12, a system information block 13, a system information block 14, a system information block 15, a system information block 16, or a system information block 17, or may be system information in another system information block. This is not listed one by one herein. Alternatively, the system information may be system information in another form, for example, system information carried in a paging message or system information obtained by using RRC signaling. This is not limited herein.

S802: The network device sends DCI.

Correspondingly, the terminal obtains/receives the DCI.

The DCI is for scheduling uplink transmission of the terminal.

The DCI includes a third frequency domain parameter and a modulation and coding scheme of a second time-frequency resource. The third frequency domain parameter is for frequency domain resource allocation of the second time-frequency resource. For example, the third frequency domain parameter includes all frequency domain parameters of the second time-frequency resource.

In addition, a second frequency domain parameter of the first time-frequency resource may be further explicitly or implicitly configured by using the DCI. Therefore, the DCI includes the second frequency domain parameter of the first time-frequency resource. Alternatively, the second frequency domain parameter may be explicitly or implicitly configured by using a MAC-CE.

The second frequency domain parameter is for the frequency domain resource allocation of the first time-frequency resource. For example, the second frequency domain parameter is for determining, from the available frequency domain resource of the first time-frequency resource, an actual frequency domain resource of the first time-frequency resource or that no available frequency domain resource exists.

After receiving the DCI, the terminal parses the DCI to obtain the second frequency domain parameter, the third frequency domain parameter, and the modulation and coding scheme.

When the first time-frequency resource exists, a time domain position of the first time-frequency resource is the same as a time domain position of the second time-frequency resource, and a frequency domain position of the first time-frequency resource is different from a frequency domain position of the second time-frequency resource. The terminal may determine the time domain position and the second frequency domain parameter of the first time-frequency resource based on the DCI.

That the time domain position of the first time-frequency resource is the same as the time domain position of the second time-frequency resource indicates that OFDM symbol indexes of the first time-frequency resource and the second time-frequency resource are the same, or OFDM symbol positions of the first time-frequency resource and the second time-frequency resource are the same. In other words, OFDM symbols scheduled on the first time-frequency resource and the second time-frequency resource are the same.

For example, the first time-frequency resource may be for carrying a TR signal of the terminal.

The second time-frequency resource is for carrying a first signal of the terminal. The first signal includes at least one of the following: a modulation signal and a reference signal. The modulation signal includes at least one of the following: a data signal carried on a physical uplink shared channel (physical uplink shared channel, PUSCH), control information carried on a physical uplink control channel (physical uplink control channel, PUCCH), a preamble (preamble), and a random access message 3 (message 3, Msg3). The reference signal includes a sounding reference signal (sounding reference signal, SRS).

For example, the transmit power of the first time-frequency resource may be associated with at least one of the following: a transmit power of the second time-frequency resource and a first difference.

For example, the transmit power of the first time-frequency resource may be a relative value shown in Formula 1.

$$\mathrm{P}_{TR} = P - \Delta P \qquad \text{Formula 1}$$

$\mathrm{P}_{TR}$ represents the transmit power of the first time-frequency resource, and the transmit power of the first time-frequency resource may be an average power of the first time-frequency resource or a maximum power of the first time-frequency resource. P represents a reference transmit power of the first time-frequency resource. $\Delta P$ represents a difference between the transmit power of the first time-frequency resource and the reference transmit power, namely, the first difference. The reference transmit power may be a transmit power of the first signal. For example, the transmit power of the first time-frequency resource is less than the transmit power of the first signal.

A unit of $\Delta P$ is dB. In Formula 1, $\Delta P$ is a positive value, and $\Delta P$ has a minimum value. For example, the minimum value is not less than 10 dB.

For another example, the transmit power of the first time-frequency resource may be a relative value shown in Formula 2.

$$\mathrm{P}_{TR} = P + \Delta P \qquad \text{Formula 2}$$

For meanings of $\mathrm{P}_{TR}$, P, and $\Delta P$, refer to the meanings in Formula 1.

In Formula 2, $\Delta P$ is a negative value, and $\Delta P$ has a maximum value. For example, the maximum value is not greater than -10 dB.

For $\Delta P$, there may be a plurality of configuration manners as follows.

In a configuration manner, the first signaling includes the first difference. In other words, a specific value of $\Delta P$ may be directly configured or indicated by using RRC signaling, MAC-CE signaling, or DCI.

In another configuration manner, the DCI signaling includes the first difference. In other words, a specific value of $\Delta P$ may be directly configured or indicated by using the DCI.

In still another configuration manner, the first signaling includes a plurality of first differences, and the DCI signaling includes one of the plurality of first differences. For example, a plurality of $\Delta P$ may be configured by using RRC signaling, and one of the plurality of $\Delta P$ is indicated by using MAC-CE signaling or the DCI signaling. In other words, when a value of $\Delta P$ is configured by using the first signaling, the value may be updated by using the DCI signaling.

In addition, one terminal may use a plurality of first time-frequency resources. When the network device configures a plurality of first time-frequency resources for the terminal, first differences corresponding to a part or all of the plurality of first time-frequency resources may be the same. Transmit powers of the part or all of the first time-frequency resources may be configured by using the first signaling, in other words, the first differences corresponding to the part or all of the first time-frequency resources are configured by using the first signaling. First differences corresponding to the plurality of first time-frequency resources may alternatively be different. Based on indexes of different first time-frequency resources, first differences corresponding to the first time-frequency resources may be independently configured.

The first difference may be associated with at least one of the following: a bandwidth of the first time-frequency resource, a bandwidth of the second time-frequency resource, a modulation scheme of an adjacent scheduled frequency band of the second time-frequency resource, a modulation and coding scheme of the adjacent scheduled frequency band of the second time-frequency resource, and a modulation scheme of the second time-frequency resource.

In an implementation, the first difference is associated with the bandwidth of the first time-frequency resource and the bandwidth of the second time-frequency resource. For example, the first difference may be associated with a ratio R. R is a ratio of the bandwidth of the first time-frequency resource to the bandwidth of the second time-frequency resource, or R is a ratio of the bandwidth of the second time-frequency resource to the bandwidth of the first time-frequency resource.

The first difference $\Delta P$ may be further represented as a basic value $\Delta P0$ and a variation $\Delta P1$, where $\Delta P = \Delta P0 + \Delta P1$, or $\Delta P = \Delta P0 * \Delta P1$. The basic value $\Delta P0$ may be preconfigured by the network device. The variation $\Delta P1$ of the first difference may be associated with the ratio R. The first difference $\Delta P$ in the following may be replaced with the variation $\Delta P1$ of the first difference.

For example, an association relationship between the ratio R and the first difference $\Delta P$ (or the variation $\Delta P1$ of the first difference) may be shown in Table 1.

**Table 1**

| R | $\Delta P/\Delta P1$ |
|---|---|
| R<R1 | P1 |
| R2<R<R3 | P2 |
| R3<R | P3 |

The association relationship between different ratios R and the first difference $\Delta P$ (or the variation $\Delta P1$ of the first difference) may be indicated in the first signaling. Alternatively, the association relationship may be agreed on in the protocol. $\Delta P/\Delta P1$ represents $\Delta P$ or $\Delta P1$.

Alternatively, corresponding $\Delta P$ or $\Delta P1$ may be selected by using DCI signaling.

In addition, a relationship between the parameter R and $\Delta P$ may alternatively be a linear or non-linear function relationship. For example, $\Delta P = \Delta P0 + aR$, where $\Delta P0$ and a may be indicated by using the first signaling or agreed on in the protocol. For example, $\Delta P$ is an integer, and a rounding operation may be performed on $\Delta P0 + aR$.

After receiving Table 1 configured by using the first signaling, the terminal may obtain the ratio R based on the obtained bandwidth of the first time-frequency resource and the obtained bandwidth of the second time-frequency resource, and then determine, based on the association relationship shown in Table 1, the first difference corresponding to R, to determine the transmit power of the first time-frequency resource.

In another implementation, the adjacent scheduled frequency band of the second time-frequency resource is easily affected by a signal sent on the first time-frequency resource, and different modulation schemes or modulation and coding schemes of a signal on the adjacent scheduled frequency band of the second time-frequency resource have different interference tolerance. Therefore, the first difference may be further associated with the modulation scheme of the adjacent scheduled frequency band of the second time-frequency resource and/or the modulation and coding scheme of the adjacent scheduled frequency band of the second time-frequency resource. The adjacent scheduled frequency band of the second time-frequency resource is a frequency band that is different from the first time-frequency resource by a specific threshold. The association relationship may be configured by using the first signaling.

For example, Table 2 shows an association relationship between the first difference and the modulation scheme of the adjacent scheduled frequency band of the second time-frequency resource.

**Table 2**

| Modulation scheme | $\Delta P$ |
|---|---|
| QPSK | P1 |

(continued)

| Modulation scheme | $\Delta P$ |
|---|---|
| 16QAM | P2 |
| 64QAM | P3 |
| 256QAM | P4 |

Similarly, an association relationship between the modulation and coding scheme of the adjacent scheduled frequency band of the second time-frequency resource and the first difference or an association relationship between the modulation scheme and the modulation and coding scheme of the adjacent scheduled frequency band of the second time-frequency resource and the first difference may be further configured.

The network device may indicate the modulation scheme or the modulation and coding scheme of the adjacent scheduled frequency band of the second time-frequency resource by using the first signaling or the DCI signaling. After parsing the first signaling or the DCI signaling to obtain the modulation scheme or the modulation and coding scheme of the adjacent scheduled frequency band of the second time-frequency resource, the terminal may determine, based on the association relationship, the first difference corresponding to the modulation scheme or the modulation and coding scheme of the adjacent scheduled frequency band of the second time-frequency resource, to determine the transmit power of the first time-frequency resource.

In still another implementation, because first signals according to different modulation schemes have different PAPR values, the modulation scheme of the first signal may affect a quantity of peak-clipped signals, so that a power value of a peak-clipped signal is affected. Therefore, the first difference may alternatively be associated with the modulation scheme of the second time-frequency resource. An association relationship between different modulation schemes and different first differences may be configured or indicated by using the first signaling or the DCI signaling, or an association relationship between different modulation schemes and different first differences may be agreed on in the protocol.

The network device may indicate the modulation scheme of the second time-frequency resource by using the first signaling or the DCI signaling, so that the terminal can determine, based on the modulation scheme of the second time-frequency resource and the association relationship, the first difference corresponding to the modulation scheme, to determine the transmit power of the first time-frequency resource.

In still another implementation, the first difference may be associated with the bandwidth of the first time-frequency resource, the bandwidth of the second time-frequency resource, and the modulation scheme of the second time-frequency resource. An association relationship between bandwidths of different first time-frequency resources, bandwidths of different second time-frequency resources, and modulation schemes of different second time-frequency resources and different first differences may be configured or indicated by using the first signaling or the DCI signaling, or an association relationship may be agreed on in the protocol.

For example, Table 3 shows an association relationship between the bandwidth of the first time-frequency resource, the bandwidth of the second time-frequency resource, and the modulation scheme of the second time-frequency resource and the first difference $\Delta P$ (or the variation $\Delta P1$ of the first difference).

**Table 3**

| Modulation scheme | R | $\Delta P/\Delta P1$ |
|---|---|---|
| QPSK | R<R1 | P1 |
| QPSK | R2<R<R3 | P2 |
| QPSK | R3<R | P3 |
| 16QAM | R<R1 | P3 |
| 16QAM | R2<R<R3 | P4 |
| 16QAM | R3<R | P5 |
| 64QAM | R<R1 | P6 |
| 64QAM | R2<R<R3 | P7 |
| 64QAM | R3<R | P8 |
| 256QAM | R<R1 | P9 |
| 256QAM | R2<R<R3 | P10 |

(continued)

| Modulation scheme | R | $\Delta P/\Delta P1$ |
|---|---|---|
| 256QAM | R3<R | P11 |

The network device may indicate the modulation scheme of the second time-frequency resource, the bandwidth of the first time-frequency resource, and the bandwidth of the second time-frequency resource by using the first signaling or the DCI signaling, so that the terminal may determine, based on the modulation scheme of the second time-frequency resource, the bandwidth of the first time-frequency resource, the bandwidth of the second time-frequency resource, and the association relationship, the first difference corresponding to the modulation scheme, to determine the transmit power of the first time-frequency resource.

For example, the implementations may be implemented independently, or may be implemented in combination.

Optionally, the method may further include the following steps (represented by dashed lines in the figure).

S803: The terminal sends the first signal on the second time-frequency resource.

The terminal may further send the TR signal on the first time-frequency resource.

The TR signal is sent, so that the PAPR of the first signal can be reduced.

Correspondingly, the network device receives the first signal and the TR signal. The network device does not need to learn of what is sent on the TR signal, and only needs to demodulate the first signal on the second time-frequency resource.

It should be noted that when a subcarrier of the first time-frequency resource collides with a subcarrier of the first signal, the subcarrier of the first signal is invalid on the subcarrier of the first time-frequency resource, in other words, the terminal does not send the first signal on the subcarrier or skips the subcarrier.

According to the communication method provided in this embodiment of this application, the transmit power of the first time-frequency resource is configured by using the first signaling, so that the terminal can accurately determine the transmit power of the first time-frequency resource, to avoid impact on an adjacent frequency band.

In another embodiment, FIG. 9 is a diagram of an example of a power spectrum of a first time-frequency resource according to an embodiment of this application. A power spectral density (power spectral density, PSD) above 20 dBm/MHz is a power of the foregoing first signal, a PSD about 20 dBm/MHz is a power on the first time-frequency resource, and a PSD below 0 dBm/MHz is an out-of-band power. It can be learned from a distortion characteristic of a signal on the first time-frequency resource shown in FIG. 9 that, on an outer side of the first time-frequency resource, as the signal is farther away from the first time-frequency resource, a power of the distorted signal is smaller, and interference to a signal on an adjacent frequency band is lower. Therefore, a guardband (guardband, BWG) may exist at a frequency domain position adjacent to the first time-frequency resource, or a guardband may exist at an edge position in one or more consecutive frequency domain resource blocks.

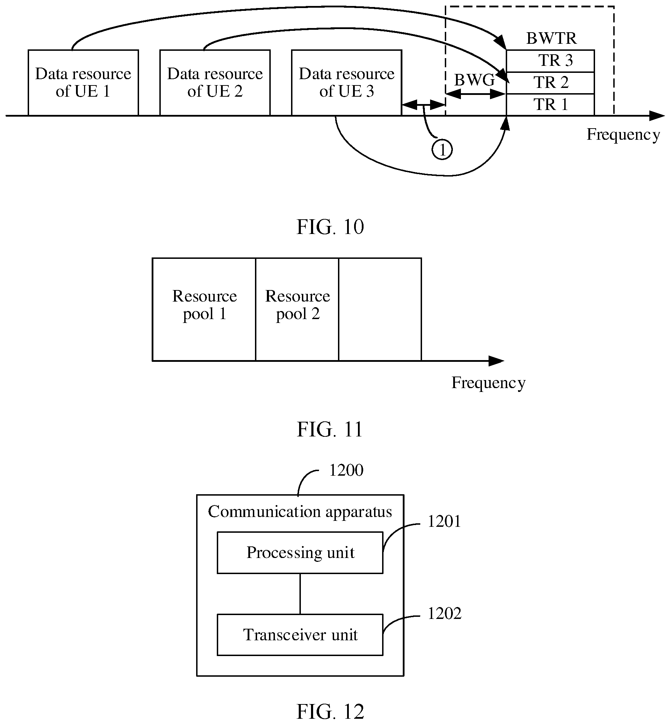

For example, the frequency domain position adjacent to the first time-frequency resource includes one side or two sides of the first time-frequency resource. FIG. 10 is a diagram of setting a guardband according to an embodiment of this application. The guardband is set at a frequency domain position adjacent to a first time-frequency resource (specifically, on one side of the first time-frequency resource).

For example, the edge position in the one or more consecutive frequency domain resource blocks includes one side of a 1st frequency domain resource block and/or a last frequency domain block in the one or more consecutive frequency domain resource blocks.

A size of the guardband may be agreed on in a protocol.

Alternatively, a size of the guardband may be associated with a scheduled bandwidth (BWTR) of the first time-frequency resource shown in FIG. 10. For example, a larger scheduled bandwidth of the first time-frequency resource indicates a larger guardband.

For example, there may be a function relationship between the BWG and the BWTR. A function relationship is BWG=floor(BWTR*c/K3)*K4, where c is a scaling factor of the BWG and the BWTR, and K3 and K4 are granularity factors (unit: physical resource block (physical resource block, PRB)) of the BWG. A part or all of c, K3, and K4 may be a value specified in the protocol, or may be a value configured by a network device. For example, K3 and K4 are values specified in the protocol, and c is a value configured by the network device. A value of K4 may be 12 (1 PRB=12 resource elements (resource elements, REs)), and a value of K3 may be 12 or 24 (1 PRB=24 REs). For example, assuming that BWTR=60 REs, c=0.1, K3=12, and K4=12, BWG=floor(60*0.1/12)* 12=1* 12 REs=12 REs. For another example, assuming that BWTR=600 REs, c=0.1, K3=12, and K4=24, BWG=floor(600*0.1/12)*24=5*24 REs=120 REs.

The size of the guardband can be accurately determined based on the scheduled bandwidth of the first time-frequency resource, to reduce the interference to the signal on the adjacent frequency band of the first time-frequency resource.

That the guardband is set on one side or two sides of the first time-frequency resource may be agreed on in the protocol. For example, when the first time-frequency resource is at an edge of a system bandwidth, no guardband needs to be set on an outer side of the edge of the system bandwidth. In this case, a guardband of the system bandwidth is the guardband of the first time-frequency resource. Therefore, a guardband needs to be set only on an inner side of a frequency band of the first time-frequency resource. When a plurality of first time-frequency resources are configured for a terminal by using the first signaling, a same guardband configuration may be used for the plurality of first time-frequency resources. In an implementation, the same guardband configuration indicates a same guard bandwidth. In another implementation, the same guardband setting indicates same guardband parameters c, K3, and K4.

The guardband is set, so that the interference to the signal on the adjacent frequency band of the first time-frequency resource can be reduced.

In addition, a relative power value of an out-of-band (a frequency band indicated by a reference numeral ① in FIG. 10) may be further specified in the protocol. The relative power value of the out-of-band is a power value of a frequency or a specific bandwidth that is a first threshold away from a bandwidth edge of the first time-frequency resource. In addition, the relative power value of the out-of-band may alternatively be a power value of a frequency or a specific bandwidth that is a first threshold away from a bandwidth center of the first time-frequency resource, or a power value of a frequency or a specific bandwidth that is a first threshold away from an edge of a BWG bandwidth. The power value may be offset with reference to a transmit power of the first time-frequency resource, as shown in Formula 3.

$$P_{BWG} = P_R - \Delta P_{TR} \qquad\qquad \text{Formula 3}$$

$P_{BWG}$ represents the relative power value of the out-of-band, $P_R$ represents a power value of a reference signal, and $\Delta P_{TR}$ represents a difference between $P_{BWG}$ and the power value of the reference signal. The reference signal may be a TR signal, or may be the first signal.

When the network device configures $P_{BWG}$, refer to the configuration solution of the transmit power of the first time-frequency resource in the foregoing embodiment.

When the network device configures resource pools of a plurality of first time-frequency resources or resource positions of the plurality of first time-frequency resources, resource pools of different first time-frequency resources or resource positions of the different first time-frequency resources may have different $P_{BWG}$. FIG. 11 is a diagram of setting a guardband of a resource pool according to an embodiment of this application. A resource pool 1 may be used as a guardband of a resource pool 2. Therefore, $P_{BWG}$ of the resource pool 2 can be improved. The network device may configure $P_{BWG}$ of each resource pool and of the resource position the first time-frequency resource.

An out-of-band transmit power of the first time-frequency resource is configured by using signaling or agreed on in the protocol, so that the interference to the signal on the adjacent frequency band of the first time-frequency resource can be reduced.

It may be understood that, to implement the functions in the foregoing embodiments, the terminal and the network device include corresponding hardware structures and/or software modules for performing the functions. A person skilled in the art should be easily aware that, with reference to the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

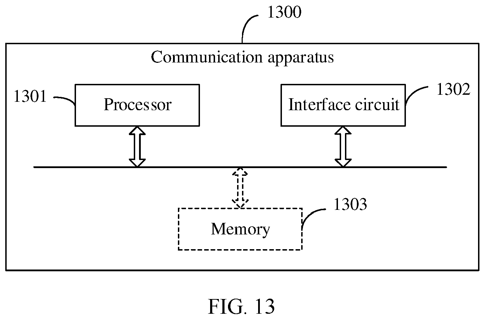

FIG. 12 and FIG. 13 are diagrams of structures of possible communication apparatuses according to embodiments of this application. These communication apparatuses may be configured to implement functions of the terminal or the network device in the foregoing method embodiments. Therefore, the beneficial effects of the foregoing method embodiments can also be implemented.

FIG. 12 is a diagram of a structure of a communication apparatus according to an embodiment of this application. The communication apparatus 1200 includes a processing unit 1201 and a transceiver unit 1202.

When the communication apparatus 1200 is configured to implement the functions of the terminal in the foregoing method embodiment, the processing unit 1201 is configured to obtain first signaling, where the first signaling includes a transmit power of a first time-frequency resource and a first frequency domain parameter of the first time-frequency resource, and the first frequency domain parameter is for frequency domain resource allocation of the first time-frequency resource. The processing unit 1201 is further configured to obtain downlink control information, where the downlink control information includes a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

When the communication apparatus 1200 is configured to implement the functions of the network device in the foregoing method embodiment, the transceiver unit 1202 is configured to send first signaling, where the first signaling includes a transmit power of a first time-frequency resource and a first frequency domain parameter of the first time-frequency resource, the first frequency domain parameter is for frequency domain resource allocation of the first time-frequency resource, and an available frequency domain resource includes one or more consecutive frequency domain resource blocks. The transceiver unit 1202 is further configured to send downlink control information, where the downlink control information includes a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource. When the first time-frequency resource exists, a time domain position of the first time-frequency resource is the same as a time domain position of the second time-frequency resource, and a frequency domain position of the first time-frequency resource is different from a frequency domain position of the second time-frequency resource.

In a possible implementation, the first time-frequency resource is for carrying a tone reservation TR signal of the terminal, the second time-frequency resource is for carrying a first signal of the terminal, and the first signal includes at least one of the following: a modulation signal or a reference signal.

In this implementation, the TR signal is carried on the first time-frequency resource, so that a PAPR of the first signal can be reduced.

In another possible implementation, the modulation signal includes at least one of the following signals: a data signal, uplink control information, and a message 3. The reference signal includes at least one of the following signals: a sounding reference signal, a demodulation reference signal, and a random access preamble.

In still another possible implementation, the transmit power of the first time-frequency resource is associated with at least one of the following: a transmit power of the second time-frequency resource and a first difference.

In this implementation, the transmit power of the first time-frequency resource is associated with the at least one of the transmit power of the second time-frequency resource and the first difference. The transmit power of the second time-frequency resource and/or the first difference are/is obtained, and in this case, the transmit power of the first time-frequency resource can be accurately determined.

In still another possible implementation, $P_{TR} = P - \Delta P$, where $P_{TR}$ is the transmit power of the first time-frequency resource, $P$ is the transmit power of the second time-frequency resource, and $\Delta P$ is the first difference.

In still another possible implementation, the first signaling includes the first difference. Alternatively, the downlink control information includes the first difference. Alternatively, the first signaling includes a plurality of first differences, and the downlink control information indicates one of the plurality of first differences.

In this implementation, the first difference may be configured or indicated by using the first signaling or the downlink control information, so that the terminal can accurately determine the transmit power of the first time-frequency resource based on the first difference and the transmit power of the second time-frequency resource.

In still another possible implementation, the first difference is associated with at least one of the following: a bandwidth of the first time-frequency resource, a bandwidth of the second time-frequency resource, a modulation scheme of an adjacent scheduled frequency band of the second time-frequency resource, a modulation and coding scheme of the adjacent scheduled frequency band of the second time-frequency resource, and a modulation scheme of the second time-frequency resource.

In this implementation, the terminal obtains the at least one of the bandwidth of the first time-frequency resource, the bandwidth of the second time-frequency resource, the modulation scheme of the adjacent scheduled frequency band of the second time-frequency resource, the modulation and coding scheme of the adjacent scheduled frequency band of the second time-frequency resource, and the modulation scheme of the second time-frequency resource. In this case, the transmit power of the first time-frequency resource can be accurately determined based on the association relationship.

In still another possible implementation, a guardband exists at a frequency domain position adjacent to the first time-frequency resource, or a guardband exists in an edge position in the one or more consecutive frequency domain resource blocks.

In this implementation, the guardband is set, so that interference to a signal on an adjacent frequency band of the first time-frequency resource can be reduced.

In still another possible implementation, a size of the guardband is associated with the scheduled bandwidth of the first time-frequency resource.

In this implementation, the size of the guardband can be accurately determined based on the scheduled bandwidth of the first time-frequency resource, to reduce the interference to the signal on the adjacent frequency band of the first time-frequency resource.

In still another possible implementation, the first signaling further includes an out-of-band transmit power of the first time-frequency resource, or an out-of-band transmit power of the first time-frequency resource is agreed on in a protocol.

In this implementation, the out-of-band transmit power of the first time-frequency resource is configured by using the signaling or agreed on in the protocol, so that the interference to the signal on the adjacent frequency band of the first time-frequency resource can be reduced.

In still another possible implementation, the out-of-band transmit power of the first time-frequency resource is associated with the transmit power of the second time-frequency resource.

In still another possible implementation, different first time-frequency resources correspond to a same out-of-band transmit power.

FIG. 13 is a diagram of a structure of another communication apparatus according to an embodiment of this application. The communication apparatus 1300 includes a processor 1301 and an interface circuit 1302. The processor 1301 and the interface circuit 1302 are coupled to each other. It may be understood that the interface circuit 1302 may be a transceiver or an input/output interface. Optionally, the communication apparatus 1300 may further include a memory 1303, configured to store instructions executed by the processor 1301, store input data needed by the processor 1301 to run the instructions, or store data generated after the processor 1301 runs the instructions.

When the communication apparatus 1300 is configured to implement the method shown in FIG. 8, the processor 1301 is configured to implement a function of the foregoing processing unit 1201, and the interface circuit 1302 is configured to implement the functions of the foregoing transceiver unit 1202.

When the communication apparatus is a chip used in a terminal, the node chip implements the functions of the terminal in the foregoing method embodiment. The node chip receives information from another module (for example, a radio frequency module or an antenna) in the terminal, where the information is sent by another node or other UE to the terminal. Alternatively, the node chip sends information to another module (for example, a radio frequency module or an antenna) in the terminal, where the information is sent by the terminal to another node or other UE.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or a storage medium in any other form well-known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a first node. Certainly, the processor and the storage medium may exist as discrete components in the terminal.

An embodiment of this application further provides a communication system, including the foregoing communication apparatuses.

An embodiment of this application further provides a computer-readable storage medium. The computer-readable storage medium stores a computer program or instructions. When the program or the instructions are executed by a processor, the method in the foregoing embodiment is performed.

An embodiment of this application further provides a computer program product. When the computer program product is executed on a computing device, the method in the foregoing embodiment is performed.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or a part of the procedures or the functions in embodiments of this application are performed. The computer may be a general-purpose computer, a dedicated computer, a computer network, a network device, a terminal, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In the formula in this application, the character "/" indicates a "division" relationship between the associated objects.

It may be understood that various numbers in embodiments of this application are only used for differentiation for ease of description, and are not used to limit the scope of embodiments of this application. Sequence numbers of the foregoing processes do not mean execution sequences, and the execution sequences of the processes should be determined based on functions and internal logic of the processes.

**Claims**

1. A communication method, wherein the method comprises:

   obtaining, by a terminal, first signaling, wherein the first signaling comprises a transmit power of a first time-frequency resource and a first frequency domain parameter of the first time-frequency resource, and the first frequency domain parameter is for frequency domain resource allocation of the first time-frequency resource; and obtaining, by the terminal, downlink control information, wherein the downlink control information comprises a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource, wherein

   when the first time-frequency resource exists, a time domain position of the first time-frequency resource is the same as a time domain position of the second time-frequency resource, and a frequency domain position of the first time-frequency resource is different from a frequency domain position of the second time-frequency resource.

2. The method according to claim 1, wherein the first time-frequency resource is for carrying a tone reservation TR signal of the terminal, the second time-frequency resource is for carrying a first signal of the terminal, and the first signal comprises at least one of the following: a modulation signal and a reference signal.

3. The method according to claim 1 or 2, wherein the transmit power of the first time-frequency resource is associated with at least one of the following: a transmit power of the second time-frequency resource and a first difference.

4. The method according to claim 3, wherein the first signaling comprises the first difference; or

   the downlink control information comprises the first difference; or
   the first signaling comprises a plurality of first differences, and the downlink control information comprises one of the plurality of first differences.

5. The method according to claim 3 or 4, wherein the first difference is associated with at least one of the following: a bandwidth of the first time-frequency resource, a bandwidth of the second time-frequency resource, a modulation scheme of an adjacent scheduled frequency band of the second time-frequency resource, a modulation and coding scheme of the adjacent scheduled frequency band of the second time-frequency resource, and a modulation scheme of the second time-frequency resource.

6. The method according to any one of claims 1 to 5, wherein a guardband exists at a frequency domain position adjacent to the first time-frequency resource.

7. The method according to claim 6, wherein a size of the guardband is associated with the scheduled bandwidth of the first time-frequency resource.

8. A communication method, wherein the method comprises:

sending, by a network device, first signaling, wherein the first signaling comprises a transmit power of a first time-frequency resource and a first frequency domain parameter of the first time-frequency resource, and the first frequency domain parameter is for frequency domain resource allocation of the first time-frequency resource; and sending, by the network device, downlink control information, wherein the downlink control information comprises a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource, wherein when the first time-frequency resource exists, a time domain position of the first time-frequency resource is the same as a time domain position of the second time-frequency resource, and a frequency domain position of the first time-frequency resource is different from a frequency domain position of the second time-frequency resource.

9. The method according to claim 8, wherein the first time-frequency resource is for carrying a tone reservation TR signal of a terminal, the second time-frequency resource is for carrying a first signal of the terminal, and the first signal comprises at least one of the following: a modulation signal and a reference signal.

10. The method according to claim 8 or 9, wherein the transmit power of the first time-frequency resource is associated with at least one of the following: a transmit power of the second time-frequency resource and a first difference.

11. The method according to claim 10, wherein the first signaling comprises the first difference; or

the downlink control information comprises the first difference; or
the first signaling comprises a plurality of first differences, and the downlink control information comprises one of the plurality of first differences.

12. The method according to claim 10 or 11, wherein the first difference is associated with at least one of the following: a bandwidth of the first time-frequency resource, a bandwidth of the second time-frequency resource, a modulation scheme of an adjacent scheduled frequency band of the second time-frequency resource, a modulation and coding scheme of the adjacent scheduled frequency band of the second time-frequency resource, and a modulation scheme of the second time-frequency resource.

13. The method according to any one of claims 8 to 12, wherein a guardband exists at a frequency domain position adjacent to the first time-frequency resource.

14. The method according to claim 13, wherein a size of the guardband is associated with the scheduled bandwidth of the first time-frequency resource.

15. A communication apparatus, wherein the apparatus comprises a transceiver unit, wherein

the transceiver unit is configured to obtain first signaling, wherein the first signaling comprises a transmit power of a first time-frequency resource and a first frequency domain parameter of the first time-frequency resource, and the first frequency domain parameter is for frequency domain resource allocation of the first time-frequency resource; and the transceiver unit is further configured to obtain downlink control information, wherein the downlink control information comprises a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource, wherein when the first time-frequency resource exists, a time domain position of the first time-frequency resource is the same as a time domain position of the second time-frequency resource, and a frequency domain position of the first time-frequency resource is different from a frequency domain position of the second time-frequency resource.

16. The apparatus according to claim 15, wherein the first time-frequency resource is for carrying a tone reservation TR signal of the terminal, the second time-frequency resource is for carrying a first signal of the terminal, and the first signal comprises at least one of the following: a modulation signal and a reference signal.

17. The apparatus according to claim 15 or 16, wherein the transmit power of the first time-frequency resource is associated with at least one of the following: a transmit power of the second time-frequency resource and a first difference.

18. The apparatus according to claim 17, wherein the first signaling comprises the first difference; or

    the downlink control information comprises the first difference; or
    the first signaling comprises a plurality of first differences, and the downlink control information comprises one of the plurality of first differences.

19. The apparatus according to claim 17 or 18, wherein the first difference is associated with at least one of the following: a bandwidth of the first time-frequency resource, a bandwidth of the second time-frequency resource, a modulation scheme of an adjacent scheduled frequency band of the second time-frequency resource, a modulation and coding scheme of the adjacent scheduled frequency band of the second time-frequency resource, and a modulation scheme of the second time-frequency resource.

20. The apparatus according to any one of claims 15 to 19, wherein a guardband exists at a frequency domain position adjacent to the first time-frequency resource.

21. The apparatus according to claim 20, wherein a size of the guardband is associated with the scheduled bandwidth of the first time-frequency resource.

22. A communication apparatus, wherein the apparatus comprises a transceiver unit, wherein

    the transceiver unit is configured to send first signaling, wherein the first signaling comprises a transmit power of a first time-frequency resource and a first frequency domain parameter of the first time-frequency resource, and the first frequency domain parameter is for frequency domain resource allocation of the first time-frequency resource; and
    the transceiver unit is further configured to send downlink control information, wherein the downlink control information comprises a second frequency domain parameter of the first time-frequency resource and a third frequency domain parameter and a modulation and coding scheme of a second time-frequency resource, the second frequency domain parameter is for the frequency domain resource allocation of the first time-frequency resource, and the third frequency domain parameter is for frequency domain resource allocation of the second time-frequency resource, wherein
    when the first time-frequency resource exists, a time domain position of the first time-frequency resource is the same as a time domain position of the second time-frequency resource, and a frequency domain position of the first time-frequency resource is different from a frequency domain position of the second time-frequency resource.

23. The apparatus according to claim 22, wherein the first time-frequency resource is for carrying a tone reservation TR signal of a terminal, the second time-frequency resource is for carrying a first signal of the terminal, and the first signal comprises at least one of the following: a modulation signal and a reference signal.

24. The apparatus according to claim 22 or 23, wherein the transmit power of the first time-frequency resource is associated with at least one of the following: a transmit power of the second time-frequency resource and a first difference.

25. The apparatus according to claim 24, wherein the first signaling comprises the first difference; or

    the downlink control information comprises the first difference; or
    the first signaling comprises a plurality of first differences, and the downlink control information comprises one of the plurality of first differences.

26. The apparatus according to claim 24 or 25, wherein the first difference is associated with at least one of the following: a bandwidth of the first time-frequency resource, a bandwidth of the second time-frequency resource, a modulation scheme of an adjacent scheduled frequency band of the second time-frequency resource, a modulation and coding scheme of the adjacent scheduled frequency band of the second time-frequency resource, and a modulation scheme of the second time-frequency resource.

27. The apparatus according to any one of claims 22 to 26, wherein a guardband exists at a frequency domain position adjacent to the first time-frequency resource.

28. The apparatus according to claim 27, wherein a size of the guardband is associated with the scheduled bandwidth of the first time-frequency resource.

29. A communication apparatus, comprising a processor, configured to execute a program stored in a memory, wherein when the program is executed, the apparatus is enabled to perform the method according to any one of claims 1 to 14.

30. A communication apparatus, comprising a logic circuit and an input/output interface, wherein

the input/output interface is configured to input first signaling and downlink control information; and
the logic circuit is configured to perform the method according to any one of claims 1 to 14.

31. A computer-readable storage medium, wherein the computer-readable storage medium stores a computer program, and when the computer program is executed by a processor, the method according to any one of claims 1 to 14 is implemented.

32. A computer program product, configured to perform, when executed on a computing device, the method according to any one of claims 1 to 14.

FIG. 1

FIG. 2

FIG. 3

S-to-P → N-point DFT → Subcarrier mapping → M-point IDFT → P-to-S → Add a CP/PS → DAC/RF

Channel

Detect ← P-to-S ← N-point IDFT ← Subcarrier remapping/uniformization ← M-point DFT ← S-to-P ← Remove a CP ← RF/ADC

FIG. 4

FIG. 5

FIG. 6a

FIG. 6b

FIG. 6c

FIG. 7

```
┌──────────┐                                              ┌──────────┐
│ Terminal │                                              │ Network  │
│          │                                              │ device   │
└────┬─────┘                                              └────┬─────┘
     │      S801: First signaling (including a transmit        │
     │      power of a first time-frequency resource and a     │
     │      first frequency domain parameter of the first      │
     │◄─────────────── time-frequency resource) ───────────────┤
     │                                                         │
     │      S802: Downlink control information (including a     │
     │      second frequency domain parameter of the first     │
     │      time-frequency resource and a third frequency      │
     │      domain parameter and a modulation and coding       │
     │◄──── scheme of a second time-frequency resource) ───────┤
     │                                                         │
     │         S803: Send a first signal on the second         │
     │              time-frequency resource                    │
     ├ ─ ─ ─ ─ ─ ─ ─ ─ ─ ─ ─ ─ ─ ─ ─ ─ ─ ─ ─ ─ ─ ─ ─ ─ ─ ─ ─►│
     │                                                         │
```

FIG. 8

**PSD with 0% filter**

PSD (dBm/ MHz)

FocuTR-120
OBO=8.6633

Frequency (MHz)

FIG. 9

FIG. 10

FIG. 11

FIG. 12

FIG. 13

## INTERNATIONAL SEARCH REPORT

| International application No. |
|---|
| **PCT/CN2023/090677** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC: H04W,H04L,H04Q

Documentation searched other than minimum documentation to the extent that such documents are included in the fields searched

Electronic data base consulted during the international search (name of data base and, where practicable, search terms used)

CNTXT, CNABS, CNKI, EPTXT, VEN, WOTXT, USTXT, 3GPP: 时域, 时频, 频域, 资源, 分配, 下行控制信息, DCI, 位置, 相同, 重合, 重叠, 不同, 功率, 调制, 参考, 预留 time, domain, frequency, resource, distribut+, allocat+, downlink control information, position, location, same, overlap, different, power, modulat+, reference, reserv+

**C. DOCUMENTS CONSIDERED TO BE RELEVANT**

| Category* | Citation of document, with indication, where appropriate, of the relevant passages | Relevant to claim No. |
|---|---|---|
| A | CN 110636610 A (HUAWEI TECHNOLOGIES CO., LTD.) 31 December 2019 (2019-12-31) description, paragraphs [0095]-[0151], and figures 3 and 4 | 1-32 |
| A | CN 114450999 A (HUAWEI TECHNOLOGIES CO., LTD.) 06 May 2022 (2022-05-06) entire document | 1-32 |
| A | EP 3923652 A1 (HUAWEI TECHNOLOGIES CO., LTD.) 15 December 2021 (2021-12-15) entire document | 1-32 |
| A | WO 2021134386 A1 (HUAWEI TECHNOLOGIES CO., LTD.) 08 July 2021 (2021-07-08) entire document | 1-32 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 June 2023** | **06 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 110636610 | A | 31 December 2019 | WO | 2019242760 | A1 | 26 December 2019 |
| | | | | EP | 3806564 | A1 | 14 April 2021 |
| | | | | EP | 3806564 | A4 | 15 September 2021 |
| | | | | US | 2021112562 | A1 | 15 April 2021 |
| CN | 114450999 | A | 06 May 2022 | None | | | |
| EP | 3923652 | A1 | 15 December 2021 | EP | 3923652 | A4 | 20 April 2022 |
| | | | | WO | 2020164639 | A1 | 20 August 2020 |
| | | | | JP | 2022520468 | A | 30 March 2022 |
| | | | | JP | 7174859 | B2 | 17 November 2022 |
| WO | 2021134386 | A1 | 08 July 2021 | US | 2022330227 | A1 | 13 October 2022 |
| | | | | EP | 4072186 | A1 | 12 October 2022 |
| | | | | EP | 4072186 | A4 | 28 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   CN 202210510827